**Europäisches Patentamt**

**European Patent Office**

**Office européen des brevets**

(19)

(11) Veröffentlichungsnummer: **0 171 846**
**B1**

(12) **EUROPÄISCHE PATENTSCHRIFT**

(45) Veröffentlichungstag der Patentschrift:
**22.11.90**

(51) Int. Cl.⁵: **C09K 3/14**

(21) Anmeldenummer: **85201195.6**

(22) Anmeldetag: **16.07.85**

(54) **Verfahren zur Herstellung von Schleifmitteln.**

(30) Priorität: **01.08.84 AT 2477/84**

(43) Veröffentlichungstag der Anmeldung:
**19.02.86 Patentblatt 86/8**

(45) Bekanntmachung des Hinweises auf die Patenterteilung:
**22.11.90 Patentblatt 90/47**

(84) Benannte Vertragsstaaten:
**CH DE FR GB IT LI**

(56) Entgegenhaltungen:
**EP-A- 0 022 420**
**DE-B- 1 058 423**
**DE-B- 2 560 066**
**FR-A- 1 100 434**

(73) Patentinhaber: **Treibacher Chemische Werke Aktiengesellschaft, Postfach 31, A-9330 Treibach(AT)**

(72) Erfinder: **Zeiringer, Hans, Passering, Neubau, A-9321 Kappel/Krappfeld(AT)**

(74) Vertreter: **Kliment, Peter, Dipl.-Ing. Mag.-jur., Singerstrasse 8, A-1010 Wien(AT)**

## Beschreibung

Die Erfindung bezieht sich auf ein Verfahren zur Herstellung von Schleifmitteln auf Basis $\alpha$-$Al_2O_3$ und mindestens einem der beiden Aluminiumoxycarbide $Al_2OC$ und $Al_4O_4C$, wobei ein Gemisch von Aluminiumoxid mit einem kohlenstoffhaltigen Stoff geschmolzen und das geschmolzene Produkt rasch abgekühlt wird.

Aus der EP-A 0 022 420 ist ein Schleifmittel bekannt, das aus einer Kombination von kristallinen Phasen von Aluminiumoxid und wenigstens einem der beiden Aluminiumoxycarbide $Al_2OC$ und $Al_4O_4C$ besteht, wobei dem Gemisch Aluminiumoxid + kohlenstoffhaltiger Stoff in einem Anteilsverhältnis eingesetzt wird, das im Zustandsdiagramm $Al_2O_3$ + $Al_4C_3$ einer Molfraktion von $Al_4C_3$ zwischen 0,02 und 0,20 entspricht. Das geschmolzene Gemisch wird danach mit einer gesteuerten Geschwindigkeit von 10 bis mehr als 100°C pro Minute abgekühlt. Die abgekühlte Schmelze wird dann nach bekannten Methoden gebrochen, klassiert und für Materialabtragungsarbeiten verwendet.

Es wurde nunmehr festgestellt, daß beim Schmelzen eines Gemisches aus Aluminiumoxid oder aluminiumoxidreichen Stoffen mit einem C-haltigen Reduktionsmittel und nachfolgender rascher Abkühlung der Schmelze mit steigendem C-Gehalt der Anteil an $Al_4C_3$ im Endprodukt stark zunimmt. Da sich das $Al_4C_3$ bekanntlich in feuchter Luft und durch Wärmeeinwirkung beim Schleifen zersetzt, wird die Leistungsfähigkeit des Schleifmittels durch Anwesenheit von $Al_4C_3$ beträchtlich verringert.

Durch die rasche Abkühlung allein kann die Anwesenheit von $Al_4C_3$ im Endprodukt nicht gänzlich ausgeschlossen werden. Eine Wärmebehandlung ist gemäß der EP-A 22 420 nicht vorgesehen. Es wird sogar festgestellt, daß eine solche Wärmebehandlung von 24 Stunden bei 1500°C oder von 15 Minuten bei 1810°C zu einem stabilen Phasengleichgewicht führt, das zwar bei geringem Kohlenstoffgehalt der Schmelze im wesentlichen aus $Al_2O_3$ und $Al_4O_4C$ zusammengesetzt ist, jedoch bei größerem Kohlenstoffgehalt der Schmelze einen unerwünscht hohen Anteil von $Al_4C_3$ mit sich bringt.

Die DE-AS 1 058 423 betrifft ein Verfahren zur Herstellung eines Schleifmittels. Es wird $Al_2O_3$ geschmolzen und in einer speziellen Apparatur Kohlenstoff zugegeben. Dies geschieht in einer Atmosphäre eines Kohlenstoff enthaltenden Gases, z.B. Kohlenmonoxid. Das geschmolzene Produkt wird laufend abgezogen. Eine Karbidbildung ist zwar unerwünscht, jedoch läßt sie sich bei diesem Verfahren nicht vermeiden.

In der FR-A 1 100 434 wird die Schleifmittelherstellung aus $Al_2O_3$ allein oder unter Zusatz anderer Oxide oder Karbide sowie gegebenenfalls reinem Kohlenstoffzusatz beschrieben. Der Kohlenstoff liegt im Produkt als Graphit vor, bzw. kann ein solches Produkt Metall oder Metallkarbid enthalten. Der Kohlenstoffzusatz erfolgt zur Sicherung der Reduktion. Wenn man die Kohlenstoffeinbringung vermeiden will, werden wassergekühlte Metallelektroden anstatt Graphitelektroden verwendet. Das Problem der Vermeidung von $Al_4C_3$ wird in dieser Druckschrift nicht behandelt.

Weiters ist aus der DE-AS 2 560 066 ein Salzgußverfahren für Schleifmittel auf Basis von $Al_2O_3$ bekannt, in dem gegebenenfalls andere Oxide vorhanden sein können. Dabei wird die Schleifmittelschmelze durch Guß in ein geschmolzenes Salzbad einer definierten Abkühlung unterzogen. Als Verunreinigungen können auch verschiedene Metallkarbide auftreten.

Aufgabe der vorliegenden Erfindung ist es, ein Verfahren zur Herstellung von Schleifmitteln auf der Basis von $Al_2O_3$ zu schaffen, bei dem die Bildung von $Al_4C_3$ weitestgehend verhindert wird.

Erfindungsgemäß ist daher vorgesehen, daß ein Gemisch aus Aluminiumoxid oder aluminiumoxidreichen Rohstoffen, gegebenenfalls mit weiteren Zusätzen, mit einem C-haltigen Reduktionsmittel allein oder zusammen mit einem metallischen Reduktionsmittel geschmolzen und dann die Schmelze rasch abgekühlt wird, wonach das aus der erstarrten Schmelze gebrochene Schleifkorn einer Wärmebehandlung bei einer Temperatur zwischen 500°C und 1500°C während 3 min bis 24 h unterzogen wird, wobei das Material vor oder nach der Wärmebehandlung gewünschtenfalls mit einer Oberflächenschicht bestehend aus Silikaten, Korundfeinkorn, Pigmenten und/oder Eisenoxiden versehen wird.

Die gezielte Wärmebehandlung hat neben der Entfernung des schädlichen $Al_4C_3$ den Zweck, das Gefüge des Schleifmaterials in ein spezielles metastabiles Gleichgewicht zu überführen (die rasche Abkühlung der Schmelze führt zu einem extremen Ungleichgewicht im Gefüge) und der Ausheilung innerer Spannungen bzw. Gitterdeformationen.

Eine rasche Abkühlung der Schmelze, wobei die Abkühlzeit vorzugsweise mehr als 100°/min. betragen soll, ist unbedingt erforderlich, da nur dadurch die Bildung eines entsprechend mikrokristallinen Gefüges gewährleistet wird, das neben den Gefügebestandteilen die hervorragenden Schleifleistungen bedingt.

Das beispielsweise durch langsameres Abkühlen der Schmelze in Bereich von 50°C/min erhaltene Schleifmittel enthält neben dem $\alpha$-$Al_2O_3$ die beiden Oxycarbidphasen $Al_2OC$ und $Al_4O_4C$, die Schleifleistung ist jedoch wegen des grobkristallinen Gefüges unbefriedigend.

Das entsprechend rasche Abkühlen der Schmelze kann durch Guß derselben in eine Kokille mit definierten Plattenabständen, durch Guß auf metallische oder nichtmetallische Formkörper oder in eine Salz- oder Metallschmelze erfolgen.

Ein zu langes Glühen oder eine Glühbehandlung bei zu hohen Temperaturen führt zu einem weitgehenden Gleichgewichtszustand im Gefüge, d.h. zum Verschwinden der $Al_2OC$-Phase, das sich auf die Schleifleistung negativ auswirkt, wie aus den Beispielen deutlich ersichtlich ist.

Eine weitere Verbesserung der Materialeigenschaften konnte dadurch erzielt werden, daß man Zusätze von einem oder mehreren Elementen aus der Gruppe Mg, Ca, Zr, Ti, Si, Cr und/oder SE im Bereich von 0,1 – 10 Gew.-% einbrachte.

Weiters wurde festgestellt, daß für optimale Schleifleistungen die Anwesenheit beider Oxicarbidphasen, nämlich $Al_2OC$ und $Al_4O_4C$ vorteilhaft ist, wobei der Anteil der $Al_2OC$-Phase vorzugsweise größer als der der $Al_4O_4C$-Phase sein soll.

Als C-haltige Reduktionsmittel können Koks, Ruß, Grafit, Anthrazit, amorpher Kohlenstoff und/oder ein Carbid verwendet werden. Als weiteres Reduktionsmittel kann noch Al oder Mg eingesetzt werden.

Die hervorragenden Eigenschaften des nach dem erfindungsgemäßen Verfahren hergestellten Korns können durch eine Beschichtung, die je nach Beschichtungsmaterial vor oder nach dem Glühen aufgebracht wird, weiter verbessert werden. Zweck der Ummantelung ist die Schaffung einer vergrößerten Kornoberfläche, wodurch die Einbindung im Schleifwerkzeug entscheidend verbessert wird.

Zur Bestimmung der Schleifeigenschaften der erfindungsgemäß hergestellten Schleifmittel wurden von Korn P36 FEPA-Norm (Federation Europeène des Fabricants de Produits Abrasifs) die Kornzähigkeit (Kornzerfall) und die Schleifleistung bestimmt.

Zur Bestimmung der Schleifleistung wurde die erhaltene Kornfraktion 36 mit Klebstoff (Kunstharz) auf eine Gewebeunterlage aufgebracht. Durch Abtragschleifen an einer Welle aus Kohlenstoffstahl C45 bei konstantem Anpreßdruck mittels einer Bandschleifmaschine wurde darauf die Schleifleistung (Materialabtrag pro Zeiteinheit) im Vergleich zu einem zirkonoxidhaltigen Korund eutektischer Zusammensetzung und gleichen Abkühlbedingungen der Schmelze bestimmt. Für das durch Guß in eine Eisenkokille mit 5 – 7 mm Plattenabstand hergestellte Zr-haltige Schleifmittel wurde für die Schleifleistung der Index 100 willkürlich festgelegt.

Die Kornzähigkeit (Kornzerfall) wurde nach folgender Methode ermittelt: 50 g der Kornfraktion 36 mit definierter Siebanalyse wurden in einen verschraubbaren Stahlzylinder gefüllt, in welchem sich 12 Stahlkugeln mit 19 mm Durchmesser befanden. Der verschlossene Stahlzylinder wurde dann auf einem Walzenstuhl mit konstanter Umdrehungszahl 10 min lang gedreht und danach vom erhaltenen Korn erneut eine Siebanalyse durchgeführt. Der Kornzerfall ergibt sich aus dem Verhältnis der mittleren Korngröße vor und nach der Mahlbehandlung gemäß der Formel

$$\% \text{ Kornzerfall} = \frac{\text{mittlere Korngröße nach Mahlbehandlung}}{\text{mittlere Korngröße vor Mahlbehandlung}} \cdot 100 \ .$$

Da der Kornzerfall nicht nur von den spezifischen Materialeigenschaften abhängig ist sondern auch von der Kornform, wurden die erhaltenen Werte mit einem Kornformfaktor korrigiert.

Die Erfindung soll durch die folgenden Beispiele näher erläutert werden.

Beispiel 1 (Vergleichsbeispiel): Im elektrischen Lichtbogenofen wurde ein Gemisch aus 150 kg kalzinierter Tonerde (0,35 Gew.-% $Na_2O$) und 0,6 kg Kohlenstoff in Form von gemahlenem Koks eingeschmolzen. Die Schmelze wurde danach in eine Kokille mit 5 – 7 mm Plattenabständen abgegossen. Das erstarrte plattenförmige Material hatte einen C-Gehalt von 0,045 Gew.-% und einen $Na_2O$-Gehalt von 0,03 Gew.-%. Das Material wurde in industrieüblichen Zerkleinerungseinrichtungen gemahlen und zu Schleifkorn in der FEPA-Norm klassiert. Zur Ausheilung innerer Spannungen und Oxidation der eventuell anwesenden Karbide wurde das Korn 36 einer Wärmebehandlung bei 1200°C während 10 min unterzogen.

Die Prüfergebnisse des so hergestellten geglühten und ungeglühten Schleifkorns sowie des Vergleichskorns aus Zr-Korund sind in Tabelle 1 angeführt.

Tabelle 1

|  | Gew.-% Kornzerfall | Schleifleistungs-index |
|---|---|---|
| Eutektischer Zr-Korund | 38,2 | 100 |
| Korn 36 nach Beispiel 1 ungeglüht | 48,7 | 49,1 |
| Korn 36 nach Beispiel 1 geglüht | 41,5 | 65,0 |

Die Röntgenfeinstrukturanalyse (im folgenden RDA) des Materials ergab, daß sowohl das ungeglühte als auch das geglühte innerhalb der gegebenen Nachweisgrenzen ausschließlich aus $\alpha$-$Al_2O_3$ bestand.

In den folgenden Beispielen 2 - 6 wurde im wesentlichen wie in Beispiel 1 verfahren. Änderungen betreffen den Reduktionsmitteleinsatz und die Art der Glühbehandlung (Beispiel 7).

Beispiel 2: Als Reduktionsmittel wurden 3,5 kg gemahlener Koks verwendet. Das erstarrte plattenförmige Material enthielt 0,4 Gew.-% C und 0,03 Gew.-% $Na_2O$. Die RDA zeigte, daß das Material vorwiegend aus $\alpha$-$Al_2O_3$ besteht mit geringer Menge $Al_2OC$. $Al_4C_3$ konnte nicht nachgewiesen werden.

Beispiel 3: Der Reduktionsmittelzusatz betrug 8 kg gemahlenen Koks. Im Produkt wurden 1,1 Gew.-% C und weniger als 0,02 Gew.-% $Na_2O$ gefunden.

Auf Grund der RDA besteht das Material vorwiegend aus $\alpha$-$Al_2O_3$ und $Al_2OC$. Daneben fand man geringe Mengen von $Al_4O_4C$ und $Al_4C_3$.

Beispiel 4: Der Zusatz an Kohlenstoff in Form von gemahlenem Koks betrug 10 kg. Das Produkt enthielt 1,4 Gew.-% C und weniger als 0,02 Gew.-% $Na_2O$.

Die RDA zeigte, daß das Material vorwiegend aus $\alpha$-$Al_2O_3$, $Al_2OC$ und $Al_4O_4C$ besteht. Der $Al_4C_3$-Gehalt stieg gegenüber dem Produkt am Beispiel 3 erheblich an und betrug 2 - 3 Gew.-%.

Beispiel 5: Der Reduktionsmittelzusatz betrug 16 kg. Das Produkt enthielt 2,4 Gew.-% C und weniger als 0,02 Gew.-% $Na_2O$. Beim Einschmelzen des Möllers zeigte sich schon eine deutliche Verflüchtigung von Aluminium. Außerdem schäumte die Schmelze überaus heftig, sodaß, um große Verstaubungen zu verhindern, der Möller brikettiert werden mußte.

Die RDA ergab, daß das Produkt aus $\alpha$-$Al_2O_3$, $Al_2OC$ und $Al_4O_4C$ besteht, daneben wurden etwa 4 – 5 Gew.-% $Al_4C_3$ gefunden.

Beispiel 6: Der Möller, bestehend aus 150 kg kalzinierter Tonerde und 25 kg Kohlenstoff in Form von gemahlenem Koks, wurde auch hier brikettiert. Beim Einschmelzen der Briketts verflüchtigte sich viel Aluminium, außerdem schäumte die Schmelze heftig. Das in die Kokille abgegossene Produkt enthielt 4,5 Gew.-% C, der $Na_2O$-Gehalt lag unter 0,02 Gew.-%.

Die RDA zeigte, daß neben $\alpha$-$Al_2O_3$ viel $Al_2OC$ und $Al_4O_4C$ vorhanden war. Der $Al_4C_3$-Gehalt lag bei 10 Gew.-%.

Beispiel 7: Zur Entfernung des $Al_4C_3$, Ausheilung innerer Spannungen und zur Einstellung eines speziellen, metastabilen Gleichgewichts im Gefüge wurden die aus den Beispielen 2 - 6 erhaltenen, klassierten Körnungen einer Glühbehandlung unterzogen. Die Glühtemperaturen waren 1000°C, 1100°C, 1200°C, 1300°C, 1500°C und 1800°C. Die Glühdauer betrug 3, 5, 10, 20, 40, 60, 120 und 240 min. Da die Temperaturbehandlung lediglich eine Oxidation des Karbids zu den möglichen Oxicarbiden bewirken soll, wurde diese bei einer Glühdauer über 10 min unter kontrollierter Atmosphäre (größtenteils Inertatmosphäre) durchgeführt. Der Kohlenstoffgehalt sollte nach der Glühbehandlung nicht wesentlich geringer als vorher sein.

Die Prüfung der Produkte erfolgte wie in der Beschreibung angeführt. Die Prüfergebnisse sind in Tabelle 2 angeführt.

Tabelle 2

| Beispiel Nr. | Glühtemperatur °C | Glühzeit Min. | Kornzerfall Gew.-% | Schleif- leistungsindex |
|---|---|---|---|---|
| 2 | ungeglüht | | 45,0 | 49,8 |
| " | 1000 | 3 | 45,0 | 50,2 |
| " | | 10 | 41,3 | 60,2 |
| " | | 20 | 41,1 | 65,8 |
| " | | 40 | 40,8 | 60,3 |
| " | | 120 | 42,8 | 51,2 |
| " | 1100 | 3 | 44,8 | 54,6 |
| " | | 10 | 39,8 | 65,4 |
| " | | 20 | 42,8 | 65,1 |
| " | | 40 | 44,5 | 68,2 |
| " | | 120 | 45,8 | 51,5 |
| " | | 240 | 46,3 | 50,8 |
| " | 1200 | 5 | 40,8 | 58,4 |
| " | | 10 | 39,3 | 67,5 |
| " | | 20 | 39,8 | 67,3 |
| " | | 40 | 43,5 | 58,1 |
| " | | 60 | 44,9 | 51,1 |
| " | | 240 | 48,0 | 47,1 |
| " | 1300 | 3 | 41,8 | 59,5 |
| " | | 5 | 39,9 | 64,5 |
| " | | 10 | 41,5 | 62,7 |
| " | | 20 | 43,8 | 59,1 |
| " | | 40 | 45,5 | 50,6 |
| " | | 240 | 48,5 | 46,5 |
| " | 1400 | 3 | 39,2 | 63,5 |
| " | | 10 | 43,5 | 58,2 |
| " | | 60 | 48,1 | 46,5 |
| " | | 240 | 48,2 | 46,4 |

| Beispiel Nr. | Glühtemperatur °C | Glühzeit Min. | Kornzerfall Gew.-% | Schleif- leistungsindex |
|---|---|---|---|---|
| 2 | 1500 | 3 | 45,3 | 52,5 |
| " | | 5 | 44,6 | 52,5 |
| " | | 20 | 48,6 | 44,6 |
| " | | 60 | 51,2 | 41,2 |
| " | | 240 | 51,8 | 41,0 |
| " | 1800 | 3 | 47,2 | 50,3 |
| " | | 5 | 46,5 | 51,0 |
| " | | 10 | 50,3 | 47,6 |
| " | | 60 | 55,8 | 40,1 |
| " | | 240 | 56,1 | 40,0 |
| 3 | ungeglüht | | 41,2 | 66,3 |
| " | 1000 | 3 | 41,3 | 67,1 |
| " | | 5 | 40,8 | 69,4 |
| " | | 10 | 39,1 | 78,2 |
| " | | 15 | 38,5 | 95,4 |
| " | | 20 | 37,8 | 102,3 |
| " | | 40 | 37,8 | 100,1 |
| " | | 60 | 38,9 | 91,4 |
| " | | 120 | 41,5 | 68,3 |
| " | | 240 | 42,3 | 60,5 |
| " | 1100 | 5 | 39,4 | 81,2 |
| " | | 10 | 37,8 | 98,5 |
| " | | 20 | 37,2 | 103,2 |
| " | | 40 | 38,5 | 95,8 |
| " | | 120 | 43,5 | 60,2 |
| " | 1200 | 5 | 37,6 | 90,3 |
| " | | 10 | 37,0 | 100,5 |
| " | | 20 | 36,8 | 105,6 |
| " | | 40 | 38,8 | 88,3 |
| " | | 120 | 42,3 | 61,7 |
| " | 1300 | 3 | 40,5 | 78,6 |
| " | | 5 | 36,5 | 104,3 |
| " | | 10 | 35,8 | 106,2 |
| " | | 20 | 37,3 | 100,8 |
| " | | 40 | 39,8 | 81,4 |
| " | | 120 | 42,1 | 60,2 |

| Beispiel Nr. | Glühtemperatur °C | Glühzeit Min. | Kornzerfall Gew.-% | Schleif-leistungsindex |
|---|---|---|---|---|
| 3 | 1500. | 3 | 41,6 | 88,4 |
| " | | 5 | 40,3 | 98,1 |
| " | | 10 | 42,8 | 87,3 |
| " | | 40 | 45,8 | 61,4 |
| " | | 120 | 52,5 | 54,3 |
| " | 1800 | 3 | 43,5 | 67,3 |
| " | | 20 | 52,5 | 45,1 |
| " | | 240 | 58,3 | 39,5 |
| " | ungeglüht | | 37,4 | 95,3 |
| 4 | 1000 | 5 | 35,4 | 104,5 |
| " | | 10 | 34,6 | 106,3 |
| " | | 20 | 34,3 | 108,5 |
| " | | 40 | 35,8 | 106,3 |
| " | | 60 | 38,9 | 97,2 |
| " | | 240 | 43,0 | 71,3 |
| " | 1100 | 3 | 37,0 | 100,3 |
| " | | 5 | 34,6 | 107,3 |
| " | | 10 | 33,9 | 118,5 |
| " | | 20 | 34,3 | 109,4 |
| " | | 60 | 45,6 | 60,3 |
| " | 1200 | 3 | 35,8 | 102,6 |
| " | | 5 | 33,9 | 114,8 |
| " | | 10 | 32,4 | 130,3 |
| " | | 20 | 35,9 | 104,6 |
| " | | 40 | 39,9 | 90,5 |
| " | | 240 | 56,1 | 41,3 |
| " | 1300 | 3 | 34,5 | 108,5 |
| " | | 5 | 32,6 | 127,8 |
| " | | 10 | 32,8 | 129,3 |
| " | | 20 | 36,3 | 100,4 |
| " | | 60 | 51,9 | 49,6 |
| " | 1500 | 3 | 36,5 | 105,2 |
| " | | 5 | 43,2 | 78,5 |
| " | | 40 | 58,6 | 44,6 |

| Beispiel Nr. | Glühtemperatur °C | Glühzeit Min. | Kornzerfall Gew.-% | Schleif- leistungsindex |
|---|---|---|---|---|
| 4 | 1800 | 3 | 44,3 | 60,5 |
| " | | 5 | 51,6 | 52,3 |
| " | | 10 | 60,4 | 40,6 |
| " | | 120 | 60,8 | 40,3 |
| 5 | ungeglüht | | 35,8 | 105,6 |
| " | 1000 | 3 | 35,2 | 109,6 |
| " | | 5 | 34,0 | 115,5 |
| " | | 10 | 33,2 | 118,5 |
| " | | 20 | 33,0 | 128,6 |
| " | | 40 | 34,5 | 114,0 |
| " | | 60 | 35,8 | 108,6 |
| " | | 240 | 41,5 | 85,9 |
| " | 1100 | 3 | 35,1 | 108,2 |
| " | | 5 | 33,6 | 118,4 |
| " | | 10 | 32,9 | 129,6 |
| " | | 20 | 32,5 | 136,3 |
| " | | 40 | 36,8 | 105,2 |
| " | | 240 | 55,6 | 45,8 |
| " | 1200 | 3 | 35,2 | 109,5 |
| " | | 5 | 32,8 | 132,3 |
| " | | 10 | 32,4 | 145,6 |
| " | | 20 | 34,3 | 117,6 |
| " | | 40 | 38,5 | 100,6 |
| " | | 240 | 56,3 | 53,0 |
| " | 1300 | 3 | 34,6 | 112,5 |
| " | | 5 | 32,6 | 140,6 |
| " | | 10 | 33,8 | 120,3 |
| " | | 20 | 37,2 | 100,5 |
| " | | 120 | 54,6 | 51,3 |
| " | 1500 | 3 | 34,8 | 110,5 |
| " | | 5 | 40,2 | 98,3 |
| " | | 20 | 53,5 | 55,3 |
| " | | 240 | 61,5 | 40,5 |
| " | 1800 | 3 | 48,6 | 61,3 |
| " | | 40 | 61,3 | 39,8 |
| " | | 240 | 60,3 | 39,4 |

| Beispiel Nr. | Glühtemperatur °C | Glühzeit Min. | Kornzerfall Gew.-% | Schleifleistungsindex |
|---|---|---|---|---|
| 6 | ungeglüht | | 37,0 | 93,2 |
| " | 1000 | 3 | 36,1 | 104,6 |
| " | | 10 | 34,5 | 111,4 |
| " | | 20 | 33,8 | 111,0 |
| " | | 40 | 35,8 | 105,4 |
| " | | 60 | 41,3 | 90,6 |
| " | | 240 | 48,7 | 65,3 |
| " | 1100 | 3 | 35,3 | 108,4 |
| " | | 10 | 33,4 | 119,5 |
| " | | 20 | 35,6 | 108,3 |
| " | | 40 | 38,2 | 101,4 |
| " | | 240 | 50,2 | 55,0 |
| " | 1200 | 3 | 34,8 | 112,3 |
| " | | 5 | 33,5 | 118,4 |
| " | | 10 | 33,2 | 118,6 |
| " | | 20 | 38,5 | 103,6 |
| " | | 240 | 55,4 | 48,3 |
| " | 1300 | 3 | 34,2 | 117,3 |
| " | | 5 | 34,0 | 119,2 |
| " | | 10 | 35,4 | 109,6 |
| " | | 20 | 40,3 | 98,4 |
| " | | 60 | 48,3 | 61,4 |
| " | 1500 | 3 | 39,2 | 100,8 |
| " | | 5 | 40,0 | 96,4 |
| " | | 40 | 60,5 | 44,6 |
| " | | 240 | 71,0 | 28,0 |
| " | 1800 | 3 | 51,5 | 50,6 |
| " | | 40 | 68,3 | 38,7 |
| " | | 240 | 72,3 | 28,3 |

Die RDA der geglühten Produkte ergab, daß nach beispielsweise einer Glühbehandlung von 10 min bei 1200°C kein $Al_4C_3$ mehr nachgewiesen werden konnte. Bei tieferen Temperaturen war die erforderliche Glühdauer entsprechend länger, bei höheren Temperaturen entsprechend kürzer. Gleichzeitig mit der Oxidation der Karbide veränderte sich auch der Anteil der $Al_2OC$-Phase. Diese nahm zugunsten der $Al_4O_4C$-Phase geringfügig ab.

Beispiel 8 (Vergleichsbeispiel): Ein Gemisch bestehend aus 150 kg kalzinierter Tonerde (0,35 Gew.-% $Na_2O$), 1,5 kg MgO und 0,6 kg gemahlenem Koks wurde wie im Beispiel 1 im elektrischen Lichtbogenofen geschmolzen. Die Schmelze wurde darauf in eine Kokille mit 5 – 7 mm Plattenabständen abgegossen. Das erstarrte Material hatte einen Kohlenstoffgehalt von 0,05 Gew.-%, 1,03 Gew.-% MgO und 0,03 Gew.-%

9

Na$_2$O. Es wurde gemahlen, klassiert und bei 1200°C 10 min geglüht. Die Prüfung der Korneigenschaften am Korn P 36 (FEPA-Norm) erfolgte wie in der Beschreibung angeführt.

In Tabelle 3 sind die Prüfergebnisse angeführt

## Tabelle 3

| | Gew.-% Kornzerfall | Schleifleistungsindex |
|---|---|---|
| Korn P 36 nach Beispiel 8, unge- glüht | 45,8 | 55,8 |
| Korn P 36 nach Beispiel 8, ge- glüht | 40,2 | 71,3 |

Die RDA zeigte, daß dieses Material aus α-Al$_2$O$_3$ und MgO . 13 Al$_2$O$_3$ bestand. Beim Glühen trat keine signifikante Veränderung der Phasenverhältnisse auf.

In den folgenden Beispielen 9 - 15 wurde im wesentlichen wie im Beispiel 1 und 8 verfahren. Die Änderungen beziehen sich auf den Reduktionsmittelzusatz, den MgO-Zusatz und die Art der Glühbehandlung, die im Beispiel 16 beschrieben ist.

Beispiel 9: Es wurde ein Gemisch aus 150 kg kalzinierter Tonerde, 1,5 kg MgO und 6 kg Kohlenstoff in Form von gemahlenem Koks im elektrischen Lichtbogenofen eingeschmolzen. Das erstarrte Produkt enthielt 0,8 Gew.-% C, 1,08 Gew.-% MgO und weniger als 0,02 Gew.-% Na$_2$O. Auf Grund der RDA besteht das Material aus α-Al$_2$O$_3$ und den Verbindungen MgO . 13 Al$_2$O$_3$, Mg-Al-O und Al$_2$OC. Der Gehalt an Al$_4$C$_3$ lag unter der Nachweisgrenze.

Beispiel 10: 150 kg kalzinierte Tonerde, 1,5 kg MgO. und 13 kg gemahlener Koks wurden gut gemischt, brikettiert und im elektrischen Lichtbogenofen eingeschmolzen. Das Produkt enthielt 2,0 Gew.-% C, 1,1 Gew.-% MgO und weniger als 0,02 Gew.-% Na$_2$O. Die RDA ergab, daß dieses Produkt hauptsächlich aus α-Al$_2$O$_3$, MgO . 13 Al$_2$O$_3$, Al$_2$OC, Al$_4$O$_4$C und Al$_4$C$_3$ zusammengesetzt ist, wobei der Al$_4$C$_3$-Gehalt bei 3 – 4 Gew.-% lag.

Beispiel 11: Eine brikettierte Mischung aus 150 kg kalzinierter Tonerde, 1,5 kg MgO und 20 kg gemahlenem Koks wurde im elektrischen Lichtbogenofen eingeschmolzen. Das in der Kokille erstarrte Produkt enthielt 3,1 Gew.-% C, 1,1 Gew.-% MgO und weniger als 0,02 Gew.-% Na$_2$O.

Die RDA zeigte die Phasen α-Al$_2$O$_3$, MgO . 13 Al$_2$O$_3$, Al$_2$OC, Al$_4$O$_4$C und Al$_4$C$_3$, wobei der Al$_4$C$_3$-Gehalt bei 8 Gew.-% lag.

Beispiel 12: Ein Gemisch aus 150 kg kalzinierter Tonerde, 3 kg MgO und 0,6 kg gemahlenem Koks wurde, wie in Beispiel 1 beschrieben, eingeschmolzen und abgegossen. Das Produkt enthielt 0,05 Gew.-% C, 1,95 Gew.-% MgO und 0,03 Gew.-% Na$_2$O.

Die RDA zeigte als vorherrschende Phasen α-Al$_2$O$_3$ und MgO . 13 Al$_2$O$_3$. Daneben fand man noch Mg-Al-O, Carbide waren nicht feststellbar.

Beispiel 13: Es wurden 150 kg kalzinierte Tonerde, 3 kg MgO und 13 kg gemahlener Koks vermischt und das Gemisch brikettiert. Nach Schmelzen und Abgießen in eine Kokille erhielt man ein Produkt, das 1,96 Gew.-% C, 2,04 Gew.-% MgO und weniger als 0,02 Gew.-% Na$_2$O enthielt. Nach der RDA bestand das Material aus α-Al$_2$O$_3$, MgO . 13 Al$_2$O$_3$, Al$_2$OC, Al$_4$O$_4$C und 4 – 5 Gew.-% Al$_4$C$_3$.

Beispiel 14: 150 kg kalzinierte Tonerde wurden mit 5,4 kg MgO und 0,6 kg Kohlenstoff (gemahlenem Koks) gut gemischt und im elektrischen Lichtbogenofen eingeschmolzen. Die Schmelze wurde in eine Kokille mit 5 – 7 mm Plattenabständen gegossen. Das erstarrte Produkt enthielt 0,045 Gew.-% C, 3,48 Gew.-% MgO und 0,04 Gew.-% Na$_2$O.

Die RDA ergab, daß das Produkt aus α-Al$_2$O$_3$, MgO . 13 Al$_2$O$_3$, etwas Mg-Al-O und Spinell bestand.

Beispiel 15: Eine Mischung aus 150 kg kalzinierter Tonerde, 5,4 kg MgO und 13 kg gemahlenem Koks wurde brikettiert und wie im Beispiel 1 eingeschmolzen und gegossen. Das Produkt enthielt 1,94 Gew.-% C, 3,55 Gew.-% MgO und weniger als 0,02 Gew.-% Na$_2$O. Aufgrund der RDA bestand das Material aus α-Al$_2$O$_3$, MgO . 13 Al$_2$O$_3$, Mg-Al-O und den Oxycarbiden Al$_2$OC und Al$_4$O$_4$C. Daneben lagen noch 5 Gew.-% Al$_4$C$_3$ vor.

Beispiel 16: Analog wie im Beispiel 7 beschrieben, werden die klassierten Körnungen der Beispiele 9 - 15 einer Glühbehandlung unterzogen. Die Materialien der Beispiele 12 und 14 wurden jeweils nur 10 min bei 1200°C geglüht, da bei diesen keine Oxidation der Karbide erforderlich war. Alle übrigen Produkte wurden wieder bei den verschiedenen Temperaturen verschieden lang geglüht.

Die Prüfergebnisse der aus den Beispielen 9 - 15 erhaltenen Körnungen P36 (FEPA) sind in Tabelle 4 angeführt.

Tabelle 4

| Beispiel Nr. | Glühtemperatur °C | Glühdauer Min. | Kornzerfall Gew.-% | Schleifleistungs-index |
|---|---|---|---|---|
| 9 | ungeglüht | | 42,9 | 65,3 |
| " | 1000 | 3 | 42,8 | 64,5 |
| " | | 5 | 39,5 | 89,3 |
| " | | 10 | 36,8 | 109,3 |
| " | | 20 | 35,2 | 111,5 |
| " | | 40 | 34,8 | 113,2 |
| " | | 60 | 37,5 | 105,3 |
| " | | 120 | 39,6 | 92,5 |
| " | | 240 | 40,2 | 90,6 |
| " | 1100 | 3 | 42,5 | 65,3 |
| " | | 5 | 38,6 | 96,4 |
| " | | 10 | 35,2 | 115,6 |
| " | | 20 | 34,5 | 120,1 |
| " | | 40 | 36,3 | 112,3 |
| " | | 60 | 38,5 | 100,3 |
| " | | 240 | 44,4 | 68,3 |
| " | 1200 | 3 | 41,6 | 77,3 |
| " | | 5 | 37,8 | 103,2 |
| " | | 10 | 34,0 | 125,4 |
| " | | 20 | 33,3 | 131,2 |
| " | | 40 | 38,4 | 101,6 |
| " | | 60 | 41,5 | 81,3 |
| " | 1300 | 3 | 40,2 | 99,5 |
| " | | 5 | 35,3 | 113,2 |
| " | | 10 | 33,6 | 129,7 |
| " | | 20 | 37,5 | 102,6 |

| Beispiel Nr. | Glühtemperatur °C | Glühdauer Min. | Kornzerfall Gew.-% | Schleifleistungs- index |
|---|---|---|---|---|
| 9 | 1300 | 40 | 40,3 | 91,5 |
| " | | 60 | 43,1 | 70,6 |
| " | | 240 | 44,6 | 59,8 |
| " | 1500 | 3 | 38,4 | 100,5 |
| " | | 5 | 38,6 | 100,3 |
| " | | 10 | 39,3 | 95,4 |
| " | | 20 | 41,2 | 80,3 |
| " | | 60 | 44,6 | 60,5 |
| " | 1800 | 3 | 40,3 | 91,2 |
| " | | 5 | 41,5 | 80,4 |
| " | | 10 | 42,6 | 64,3 |
| " | | 240 | 45,3 | 55,0 |
| 10 | ungeglüht | | 37,5 | 102,3 |
| " | 1000 | 3 | 36,7 | 109,9 |
| " | | 5 | 35,2 | 118,6 |
| " | | 10 | 33,0 | 132,6 |
| " | | 20 | 32,3 | 150,5 |
| " | | 40 | 32,5 | 150,5 |
| " | | 60 | 34,7 | 118,6 |
| " | | 120 | 40,8 | 100,3 |
| " | 1100 | 3 | 35,0 | 117,6 |
| " | | 5 | 33,3 | 129,4 |
| " | | 10 | 32,0 | 151,3 |
| " | | 20 | 31,0 | 153,6 |
| " | | 40 | 34,1 | 122,5 |
| " | | 60 | 36,3 | 113,1 |
| " | | 120 | 38,3 | 100,6 |
| " | 1200 | 3 | 35,1 | 118,3 |
| " | | 5 | 32,0 | 154,6 |
| " | | 10 | 31,4 | 160,2 |
| " | | 20 | 31,0 | 171,3 |
| " | | 40 | 35,3 | 120,6 |
| " | | 120 | 44,6 | 67,5 |

| Beispiel Nr. | Glühtemperatur °C | Glühdauer Min. | Kornzerfall Gew.-% | Schleifleistungs- index |
|---|---|---|---|---|
| 10 | 1300 | 3 | 34,8 | 114,6 |
| " | | 5 | 32,0 | 151,8 |
| " | | 10 | 32,3 | 148,5 |
| " | | 20 | 32,8 | 138,4 |
| " | | 40 | 36,5 | 110,6 |
| " | | 60 | 42,6 | 67,3 |
| " | 1500 | 3 | 34,5 | 115,3 |
| " | | 5 | 37,2 | 108,5 |
| " | | 40 | 48,3 | 51,3 |
| ". | | 240 | 54,1 | 45,8 |
| " | 1800 | 3 | 36,3 | 111,5 |
| " | | 5 | 44,3 | 70,8 |
| " | | 20 | 50,4 | 50,6 |
| " | | 120 | 54,8 | 45,6 |
| 11 | ungeglüht | | 36,4 | 108,4 |
| " | 1000 | 3 | 36,4 | 110,6 |
| " | | 5 | 34,8 | 120,5 |
| " | | 10 | 33,2 | 128,4 |
| " | | 20 | 33,0 | 130,6 |
| " | | 40 | 38,5 | 105,4 |
| " | | 60 | 39,8 | 100,6 |
| " | | 240 | 41,3 | 90,2 |
| " | 1100 | 3 | 35,2 | 117,4 |
| " | | 5 | 33,0 | 126,5 |
| " | | 10 | 32,8 | 140,8 |
| " | | 20 | 32,1 | 145,6 |
| " | | 40 | 35,8 | 115,3 |
| " | | 60 | 39,9 | 100,3 |
| " | | 240 | 48,6 | 50,3 |
| " | 1200 | 3 | 35,3 | 117,9 |
| " | | 5 | 32,8 | 138,8 |
| " | | 10 | 32,0 | 159,6 |
| " | | 20 | 32,3 | 141,8 |
| " | | 40 | 39,6 | 102,5 |
| " | | 60 | 45,2 | 80,3 |

| Beispiel Nr. | Glühtemperatur °C | Glühdauer Min. | Kornzerfall Gew.-% | Schleifleistungs-index |
|---|---|---|---|---|
| 11 | 1300 | 3 | 33,8 | 125,6 |
| " | | 5 | 32,4 | 141,5 |
| " | | 10 | 32,8 | 137,9 |
| " | | 20 | 37,0 | 108,5 |
| " | | 40 | 43,5 | 76,2 |
| " | | 120 | 55,3 | 48,6 |
| " | 1500 | 3 | 34,2 | 118,5 |
| " | | 5 | 38,6 | 101,2 |
| " | | 20 | 48,3 | 50,6 |
| " | | 240 | 61,3 | 42,3 |
| " | 1800 | 3 | 41,6 | 85,7 |
| " | | 10 | 51,3 | 50,6 |
| " | | 240 | 66,8 | 42,0 |
| 12 | ungeglüht | | 43,2 | 65,8 |
| " | 1200 | 10 | 41,1 | 68,5 |
| 13 | ungeglüht | | 38,7 | 100,3 |
| " | 1000 | 3 | 38,5 | 100,4 |
| " | | 10 | 35,8 | 116,5 |
| " | | 20 | 34,3 | 128,4 |
| " | | 40 | 34,0 | 130,0 |
| " | | 60 | 36,0 | 110,2 |
| " | | 120 | 38,2 | 101,4 |
| " | 1100 | 3 | 36,7 | 108,4 |
| " | | 5 | 35,3 | 119,6 |
| " | | 10 | 34,7 | 125,4 |
| " | | 20 | 33,9 | 135,6 |
| " | | 40 | 35,0 | 121,6 |
| " | | 60 | 38,4 | 101,4 |
| " | | 240 | 50,3 | 67,6 |
| " | 1200 | 3 | 36,3 | 112,3 |
| " | | 5 | 34,5 | 121,6 |
| " | | 10 | 33,5 | 137,6 |
| " | | 20 | 33,4 | 145,2 |
| " | | 40 | 37,8 | 105,6 |
| " | | 60 | 40,2 | 100,4 |
| " | | 240 | 49,5 | 54,3 |

| Beispiel Nr. | Glühtemperatur °C | Glühdauer Min. | Kornzerfall Gew.-% | Schleifleistungs- index |
|---|---|---|---|---|
| 13 | 1300 | 3 | 35,0 | 120,3 |
| " |  | 5 | 33,8 | 130,2 |
| " |  | 10 | 33,2 | 141,6 |
| " |  | 20 | 37,6 | 108,4 |
| " |  | 60 | 47,3 | 65,2 |
| " | 1500 | 3 | 35,0 | 117,6 |
| " |  | 5 | 37,6 | 109,3 |
| " |  | 10 | 46,5 | 61,3 |
| " |  | 40 | 53,7 | 50,3 |
| " | 1800 | 3 | 44,3 | 73,5 |
| " |  | 10 | 49,3 | 58,6 |
| " |  | 60 | 65,4 | 40,3 |
| 14 | ungeglüht |  | 46,8 | 61,4 |
| " | 1200 | 10 | 43,3 | 75,6 |
| 15 | ungeglüht |  | 40,3 | 90,8 |
| " |  | 3 | 38,7 | 95,3 |
| " |  | 10 | 36,8 | 109,8 |
| " |  | 20 | 34,8 | 115,6 |
| " |  | 40 | 34,5 | 118,6 |
| " |  | 60 | 38,5 | 98,3 |
| " |  | 240 | 46,3 | 63,4 |
| " | 1100 | 3 | 38,1 | 102,4 |
| " |  | 5 | 36,8 | 108,9 |
| " |  | 10 | 35,3 | 118,4 |
| " |  | 20 | 34,0 | 128,5 |
| " |  | 40 | 36,3 | 109,4 |
| " |  | 60 | 40,2 | 93,5 |
| " |  | 240 | 48,5 | 53,9 |
| " | 1200 | 3 | 35,8 | 115,9 |
| " |  | 5 | 35,7 | 120,6 |
| " |  | 10 | 33,5 | 130,2 |
| " |  | 20 | 33,9 | 135,6 |
| " |  | 40 | 39,3 | 90,4 |
| " | 1300 | 3 | 34,0 | 128,4 |
| " |  | 5 | 33,6 | 137,4 |
| " |  | 10 | 35,2 | 121,3 |
| " |  | 20 | 38,4 | 100,8 |
| " |  | 120 | 54,3 | 50,0 |

| Beispiel Nr. | Glühtemperatur °C | Glühdauer Min. | Kornzerfall Gew.-% | Schleifleistungs- index |
|---|---|---|---|---|
| 15 | 1500 | 3 | 34,8 | 115,2 |
| " |  | 5 | 39,2 | 90,0 |
| " |  | 10 | 44,6 | 71,5 |
| " |  | 40 | 54,3 | 50,6 |
| " |  | 240 | 63,4 | 42,5 |
| " | 1800 | 3 | 46,5 | 59,3 |
| " |  | 10 | 49,1 | 55,3 |
| " |  | 20 | 57,3 | 50,2 |
| " |  | 240 | 67,8 | 39,5 |

Die von den geglühten Materialien durchgeführte RDA ergab, daß in den ausreichend geglühten Materialien (z.B. 10 min bei 1200°C) kein $Al_4C_3$ mehr feststellbar war. Außerdem trat etwas stärker die Phase $Al_4O_4C$ in Erscheinung, wobei der Anteil der $Al_2OC$-Phase etwas geringer wurde. Bei längerer Glühbehandlung, besonders bei höheren Temperaturen (ab 1200°C),nahm auch die Mg-Al-O-Phase (falls anfangs vorhanden) spürbar ab.

Beispiel 17: Eine Mischung, bestehend aus 150 kg kalzinierter Tonerde (0,35 Gew.-% $Na_2O$), 3,1 kg Zirkonoxid und 7 kg Kohlenstoff in Form von gemahlenem Koks, wurde wie im Beispiel 1 beschrieben, im elektrischen Lichtbogenofen eingeschmolzen. Die Schmelze wurde in eine Kokille mit Plattenabständen von 5 – 7 mm abgegossen. Das erstarrte Produkt enthielt 0,91 Gew.-% C und 2,06 Gew.-% $ZrO_2$. Der $Na_2O$-Gehalt lag unter 0,02 Gew.-%. Das Material wurde gemahlen und klassiert, vom Korn P36 (FEPA-Norm) wurden Kornzähigkeit und Schleifleistungsindex vor und nach dem Glühen (10 min 1200°C) bestimmt. Da das Zr im Produkt vorwiegend als Karbid bzw. Oxycarbid und Suboxid vorlag, mußte, um starke Oxidation derselben zu vermeiden, die Glühbehandlung teilweise unter Inertatmosphäre durchgeführt werden.

Die RDA ergab, daß das Produkt aus $\alpha$-$Al_2O_3$, $Al_2OC$ und Zirkonkarbid bestand, Suboxide und $Al_4C_3$ konnten nicht nachgewiesen werden. Beim Glühen trat außer einem geringfügigen Auftreten der $Al_4O_4C$- Phase keine wesentliche Gefügeänderung auf.

Die Ergebnisse sind in Tabelle 5 enthalten.

## Tabelle 5

| | Kornzerfall Gew.-% | Schleifleistungsindex |
|---|---|---|
| Schleifmittel P36; ungeglüht | 38,4 | 101,6 |
| Schleifmittel P36, geglüht | 36,3 | 110,4 |

Beispiel 18: 150 kg kalzinierte Tonerde, 3 kg SE-Oxid und 7 kg gemahlener Koks wurden gemischt und im elektrischen Lichtbogenofen eingeschmolzen. Die Schmelze wurde in eine Kokille mit Plattenabständen von 5 – 7 mm gegossen. Das erstarrte Produkt wies 0,88 Gew.-% C, 2,1 Gew.-% SE-Oxid und weniger als 0,02 Gew.-% $Na_2O$ auf. Es wurde gebrochen, klassiert und vom Korn P36 wurden vor und nach dem Glühen (10 min bei 1200°C) wieder der Kornzerfall und der Schleifleistungsindex ermittelt.

Auf Grund der RDA bestand das ungeglühte Produkt aus $\alpha$-$Al_2O_3$, $Al_2OC$ und einer nicht näher definierbaren Phase. $Al_4C_3$ wurde nicht festgestellt. Beim Glühen entstand etwas $Al_4O_4C$.

Die Ergebnisse sind in Tabelle 6 dargestellt.

## Tabelle 6

|                          | Kornzerfall Gew.-% | Schleifleistungsindex |
|--------------------------|--------------------|-----------------------|
| Schleifmittel P36 ungeglüht | 39,8            | 92,5                  |
| Schleifmittel P36 geglüht   | 35,4            | 115,6                 |

Beispiel 19: 110 kg kalzinierte Tonerde (0,35 Gew.-% Na$_2$O), 1,5 kg MgO und 28 kg feingemahlenes Al$_4$C$_3$ wurden gut gemischt und im elektrischen Lichtbogenofen eingeschmolzen. Die Schmelze wurde wie im Beispiel 1 rasch abgekühlt. Das Produkt enthielt 0,83 Gew.-% C, 1,1 Gew.-% MgO und weniger als 0,02 Gew.-% Na$_2$O. Vom daraus gewonnenen Korn P36 wurde der Kornzerfall und der Schleifleistungsindex vor und nach dem Glühen (10 min bei 1200°C) bestimmt. Die RDA zeigte, daß das ungeglühte Korn aus $\alpha$-Al$_2$O$_3$, MgO . 13 Al$_2$O$_3$, Mg-Al-O und Al$_2$OC aufgebaut ist. Beim Glühen nahm die Mg-Al-O-Phase etwas ab, während etwas Al$_4$O$_4$C auftrat.
Tabelle 7 zeigt die Prüfergebnisse.

## Tabelle 7

|                          | Kornzerfall Gew.-% | Schleifleistungsindex |
|--------------------------|--------------------|-----------------------|
| Schleifmittel P36 ungeglüht | 41,8            | 75,6                  |
| Schleifmittel P36 geglüht   | 33,9            | 127,8                 |

Beispiel 20: Eine Mischung, bestehend aus 135 kg kalzinierter Tonerde (0,35 Gew.-% Na$_2$O), 8 kg Al-Grieß, 1,8 kg Mg-Grieß und 7 kg Kohlenstoff in Form von gemahlenem Koks, wurde geschmolzen und rasch abgekühlt. Das Produkt enthielt 2,01 Gew.-% MgO, 1,89 Gew.-% C und weniger als 0,02 Gew.-% Na$_2$O. Das Produkt wurde gemahlen und klassiert, vom Korn P36 wurde wieder der Kornzerfall und der Schleifleistungsindex vor und nach dem Glühen (10 min bei 1200°C) bestimmt. Die RDA des ungeglühten Produkts zeigte $\alpha$-Al$_2$O$_3$, MgO . 13 Al$_2$O$_3$, Al$_2$OC, Al$_4$O$_4$C und etwa 1 – 2 Gew.-% Al$_4$C$_3$. Beim Glühen verschwand das Al$_4$C$_3$. Das Verhältnis Al$_2$OC zu Al$_4$O$_4$C verschob sich etwas zugunsten des Al$_4$O$_4$C. Die Prüfergebnisse sind in Tabelle 8 angeführt.

## Tabelle 8

|                          | Kornzerfall Gew.-% | Schleifleistungsindex |
|--------------------------|--------------------|-----------------------|
| Schleifmittel P36 ungeglüht | 39,5            | 95,6                  |
| Schleifmittel P36 geglüht   | 34,5            | 120,6                 |

17

Beispiel 21: Das nach Beispiel 10 erhaltene Schleifkorn P36 wurde zur Verbesserung der Einbindung in der Grundbindung (Kunstharz) am Schleifband mit einer Ummantelung versehen. Es wurden verschiedene Ummantelungsarten durchgeführt, wobei die Aufbringung der Ummantelung folgendermaßen erfolgte: Nach Benetzen des Schleifkorns mit einem Haftvermittler (Wasserglas, kolloidale Kieselsäure, Stärke, etc.) in einem Zwangsmischer erfolgte die Aufbringung des eigentlichen Ummantelungsmittels. Dabei war zu achten, daß eine möglichst vollständige Ummantelung des Korns erreicht wurde. Anschließend wurde das Korn zur Erreichung einer großflächigen Oberflächenstruktur und guter Haftung der Ummantelung gebrannt. Verlangte die Ummantelung eine Brenntemperatur um 1200°C, so erfolgte das Glühen und Einbrennen in einem Arbeitsgang. Bei tieferen Brenntemperaturen wurde das Korn vor der Ummantelung geglüht.

## Ummantelungsarten

| | Haftvermittler | Ummantelungsmittel | Brenntemperatur |
|---|---|---|---|
| 19.1. | Wasserglas | $Fe_2O_3$ | 800°C |
| 19.2. | Kolloid. Kieselsäure | CaO | 1200°C |
| 19.3. | Kolloid. Kieselsäure | $ZrO_2 \cdot SiO_2$ | 1200°C |
| 19.4. | Stärke | Feldspat | 1200°C |

In der Tabelle 9 sind die Kornzerfalls- und Schleifleistungsindexwerte der so hergestellten ummantelten Schleifmittel dargestellt. Die fallweise erhöhte Kornzähigkeit resultiert aus der Verkittung der Risse, die von der Zerkleinerung herstammen durch das eingedrungene Haftmittel

## Tabelle 9

| | Gew.-% Kornzerfall | Schleifleistungsindex |
|---|---|---|
| Schleifmittel nach 19.1. | 32,4 | 175,6 |
| Schleifmittel nach 19.2. | 30,5 | 185,3 |
| Schleifmittel nach 19.3. | 30,1 | 191,1 |
| Schleifmittel nach 19.4. | 32,0 | 174,8 |

Aus den Ergebnissen der einzelnen Beispiele geht deutlich hervor, daß man durch das erfindungsgemäße Verfahren ein Schleifmittel erhält, das sich durch außergewöhnliche Kornzähigkeit und Schleifleistung auszeichnet. Diese Eigenschaften drücken sich in einem niederen Kornzerfall und einem hohen Schleifleistungsindex aus.

## Patentansprüche

1. Verfahren zur Herstellung von Schleifmitteln auf Basis $\alpha$-$Al_2O_3$ und mindestens einem der beiden Aluminiumoxycarbide $Al_2OC$ und $Al_4O_4C$, wobei ein Gemisch von Aluminiumoxid mit einem kohlenstoffhaltigen Stoff geschmolzen und das geschmolzene Produkt rasch abgekühlt wird, dadurch gekennzeichnet, daß ein Gemisch aus Aluminiumoxid oder aluminiumoxidreichen Rohstoffen, gegebenenfalls mit weiteren Zusätzen, mit einem C-haltigen Reduktionsmittel allein oder zusammen mit einem metallischen Reduktionsmittel geschmolzen und dann die Schmelze rasch abgekühlt wird, wonach das aus der erstarrten Schmelze gebrochene Schleifkorn einer Wärmebehandlung bei einer Temperatur zwischen 500°C und 1500°C während 3 min bis 24 h unterzogen wird, wobei das Material vor oder nach der Wärmebehandlung gewünschtenfalls mit einer Oberflächenschicht bestehend aus Silikaten, Korundfeinkorn, Pigmenten und/oder Eisenoxiden versehen wird.

2. Verfahren nach Anspruch 1, dadurch gekennzeichnet, daß das aus der erstarrten Schmelze gebrochene Schleifkorn einer Wärmebehandlung bei einer Temperatur zwischen 1000°C und 1300°C während einer Dauer von 5 bis 60 min unterzogen wird.

3. Verfahren nach Anspruch 1 oder 2, dadurch gekennzeichnet, daß als weitere Zusätze ein oder mehrere Elemente aus der Gruppe Magnesium, Kalzium, Zirkon, Titan, Silizium, Chrom und/oder Seltene Erden im Bereich von 0,1 – 10 Gew.-%, vorzugsweise 0,5 – 5 Gew.-%, eingesetzt werden.

4. Verfahren nach einem der Ansprüche 1 bis 3, dadurch gekennzeichnet, daß zur Reduktion Koks, Ruß, Grafit, Anthrazit und/oder amorpher Kohlenstoff eingesetzt wird bzw. werden.

5. Verfahren nach einem der Ansprüche 1 bis 3, dadurch gekennzeichnet, daß als Reduktionsmittel ein Karbid, vorzugsweise Al$_4$C$_3$ eingesetzt wird.

6. Verfahren nach einem der Ansprüche 1 bis 3, dadurch gekennzeichnet, daß als Reduktionsmittel neben Kohlenstoff oder kohlenstoffhaltigen Verbindungen Aluminium oder Magnesium verwendet wird.

7. Verfahren nach einem der Ansprüche 1 bis 6, dadurch gekennzeichnet, daß die rasche Abkühlung der Schmelze durch Guß auf metallische oder nichtmetallische Formkörper oder zwischen metallischen oder nichtmetallischen Kühlplatten erfolgt.

8. Verfahren nach einem der Ansprüche 1 bis 7, dadurch gekennzeichnet, daß die Schmelze mit einer Geschwindigkeit von mehr als 100°C pro Minute abgekühlt wird.

9. Schleifmittel erhalten nach dem Verfahren nach einem der Ansprüche 1 bis 8, dadurch gekennzeichnet, daß deren aus dem Aluminiumoxycarbid und gegebenenfalls anderen Carbiden herrührende Kohlenstoffgehalt zwischen 0,1 und 6,6 Gew.-%, vorzugsweise zwischen 1 und 3 Gew.-% liegt.

10. Schleifmittel erhalten nach dem Verfahren nach einem der Ansprüche 1 bis 8, dadurch gekennzeichnet, daß deren Al$_4$C$_3$-Gehalt kleiner als 5 %, vorzugsweise jedoch kleiner als 0,5 %, ist.

**Claims**

1. Method for producing abrasive materials on the basis of α-Al$_2$O$_3$ and at least one of the two aluminium oxicarbides Al$_2$OC and Al$_4$O$_4$C, whereby a mixture of aluminium oxide with a carbonaceous material is molten and the molten matter is rapidly cooled, characterized in that a mixture of aluminium oxide or a material rich in aluminium, preferably with further additives, and a carbonaceous reducing agent is molten alone or in combination with a metallic reducing agent, whereinafter the melt is rapidly cooled and, following this, the abrasive grain broken from the solidified molten matter is subjected to a heat treatment at a temperature between 500°C and 1500°C for a period of three minutes to 24 hours, whereby the material, if so desired, is surface-coated with a layer consisting of silicates, pulverunt corundum, pigments and/or iron oxides either before or after the heat treatment.

2. Method in accordance with claim 1, characterized in that the abrasive grain broken from the solidified molten matter is subjected to a heat treatment at a temperature between 1000°C and 1300°C for a period of 5 to 60 minutes.

3. Method in accordance with claim 1 or 2, characterized in that as further additives one or several elements from the group of magnesium, calcium, zirconium, titanium, silicium, chromium and/or rare earths within a range of 0.1 to 10 weight per cent, preferably 0.5 to 5 weight per cent, are used.

4. Method in accordance with one of the claims 1 to 3, characterized in that, for the purpose of reduction, coke, carbon black, graphite, anthrazite and/or amorphous carbon is or are used.

5. Method in accordance with one of the claims 1 to 3, characterized in that as reducing agent a carbide, preferably Al$_4$C$_3$, is used.

6. Method in accordance with one of the claims 1 to 3, characterized in that next to carbon or carbonaceous compounds aluminium or magnesium is used as reducing agent.

7. Method in accordance with one of the claims 1 to 6, characterized in that the rapid cooling of the molten matter takes place by casting in metallic or non-metallic moulds or between metallic or non-metallic cooling plates.

8. Method in accordance with one of the claims 1 to 7, characterized in that the molten matter is cooled at a speed of more than 100°C per minute.

9. Abrasive materials gained corresponding to the method in accordance with one of claims 1 to 8, characterized in that said materials' carbon content derived from the aluminium oxicarbide or, preferably, other carbides lies between 0.1 and 6.6 weight per cent, preferably between 1 and 3 weight per cent.

10. Abrasive materials gained corresponding to the method in accordance with one of claims 1 to 8, characterized in that said materials' content of Al$_4$C$_3$ is less than 5 per cent, preferably less than 0.5 per cent.

**Revendications**

1. Procédé pour la fabrication d'abrasifs à base d'α-Al$_2$O$_3$ et d'au moins l'une des deux oxycarbures d'aluminium Al$_2$OC et Al$_4$O$_4$C, procédé dans lequel on fait fondre un mélange d'oxyde d'aluminium et d'une substance carbonée, et on refroidit rapidement le produit fondu, caractérisé en ce qu'on fait fondre un mélange d'oxyde d'aluminium ou de matières premières riches en oxyde d'aluminium, éventuellement avec des additifs supplémentaires, et un réducteur contenant du carbone, seul ou avec un réducteur métallique, puis on refroidit rapidement la masse fondue, ce après quoi le grain abrasif broyé, provenant de la masse fondue solidifiée, est soumis à un traitement thermique à une température de 500 à 1500°C pendant 3 minutes à 24 heures, le matériau, avant ou après le traitement thermique, étant, si on le souhaite, pourvu d'une couche superficielle constituée de silicates, de grains fins de corindon, de pigments et/ou d'oxydes de fer.

2. Procédé selon la revendication 1, caractérisé en ce que le grain abrasif broyé provenant de la masse solidifiée est soumis à un traitement thermique à une température de 1000 à 1300°C pendant 5 à 60 minutes.

3. Procédé selon les revendications 1 ou 2, caractérisé en ce qu'on utilise comme additifs supplémentaires un ou plusieurs éléments du groupe comprenant le magnésium, le calcium, le zirconium, le titane, le silicium, le chrome et/ou les terres rares, à raison de 0,1–10% en poids, de préférence de 0,5–5% en poids.

4. Procédé selon l'une des revendications 1 à 3, caractérisé en ce qu'on utilise pour la réduction du coke, du noir de carbone, du graphite, de l'anthracite et/ou du carbone amorphe.

5. Procédé selon l'une des revendications 1 à 3, caractérisé en ce qu'on utilise comme réducteur un carbure, de préférence $Al_4C_3$.

6. Procédé selon l'une des revendications 1 à 3, caractérisé en ce qu'on utilise comme réducteur, outre du carbone ou des composés carbonés, de l'aluminium ou du magnésium.

7. Procédé selon l'une des revendications 1 à 6, caractérisé en ce que le refroidissement rapide de la masse fondue est réalisé par coulée sur des articles moulés métalliques ou non-métalliques, ou entre deux plateaux de refroidissement métalliques ou non-métalliques.

8. Procédé selon l'une des revendications 1 à 7, caractérisé en ce que la masse fondue est refroidie à une vitesse supérieure à 100°C par minute.

9. Abrasif obtenu par le procédé selon l'une des revendications 1 à 8, caractérisé en ce que sa teneur en carbone, provenant de l'oxycarbure d'aluminium et éventuellement d'autres carbures, est comprise entre 0,1 et 6,6% en poids, de préférence entre 1 et 3% en poids.

10. Abrasif obtenu par le procédé selon l'une des revendications 1 à 8, caractérisé en ce que sa teneur en $Al_4C_3$ est inférieure à 5%, mais de préférence inférieure à 0,5%.